Europäisches Patentamt

European Patent Office

Office européen des brevets

(19)

(11) Veröffentlichungsnummer: **0 080 517**
A1

(12) **EUROPÄISCHE PATENTANMELDUNG**

(21) Anmeldenummer: 81109908.4

(22) Anmeldetag: 26.11.81

(51) Int. Cl.³: **B 64 C 39/06**

(43) Veröffentlichungstag der Anmeldung:
08.06.83 Patentblatt 83/23

(84) Benannte Vertragsstaaten:
AT CH DE FR IT LI

(71) Anmelder: Bachmann, Josef
Kirchgasse 6
CH-8907 Wettswill(CH)

(72) Erfinder: Bachmann, Josef
Kirchgasse 6
CH-8907 Wettswill(CH)

(74) Vertreter: Meyer, Reinhard
c/o EGLI PATENTANWÄLTE Horneggstrasse 4
CH-8008 Zürich(CH)

(54) Flugkörper und Verfahren zur Herstellung desselben.

(57) Der Flugkörper (6) ist ein Ausschnitt aus einem Basiskörper (4), der durch Drehen eines Tragflügelprofils (1) mit seiner Austrittskante um ein Bildungszentrum (B) gebildet wird. Der Durchmesser (d) des Flugkörpers (6) ist 15 - 40 % grösser als der Radius (R) des Basiskörpers (4) und berührt in einem Punkt (7) dessen Umfangslinie (5). Die vom Umfang des Flugkörpers (6) geschnittenen Tragflügelprofile (1) bilden Profilfragmente, deren Unterseite gegen die Profiloberseite gewölbt wird. Es entsteht auf diese Weise ein gegenüber anderen Flugkörpern eigenstabiler Flugkörper, dessen grosse Fläche sich besonders für das Fliegen mit Energie aus Solarzellen eignet.

Fig. 2

EP 0 080 517 A1

.

Flugkörper und Verfahren zur Herstellung desselben

Die Erfindung betrifft einen Flugkörper, dessen Flügelgrundrissfläche eine Kreisfläche ist und der eine Profilierung
aufweist, sowie ein Verfahren zur Herstellung dieses Flugkörpers.

Flugkörper, deren Tragfläche im Grundriss eine Kreisfläche
bildet, sind im Laufe der Flugzeugentwicklung einige Male
verwendet worden. Bei allen bekannten Ausführungsformen mit
aerodynamischer Profilierung weisen die Tragflächen Flügelprofile auf, die in Flugrichtung gerichtet sind.

Weiter sind Flugkörper als kreisflächenförmige Flugkörper
bekannt, deren Körperform jedoch aerodynamisch nicht tragend
ist und deren Auftrieb durch waagerecht angeordnete, drehende
Rotoren erzeugt wird.

Beide bekannten Ausführungsformen von Flugkörpern weisen den
Nachteil auf, dass sie nicht eigenstabil sind. Dagegen bietet
die Tragfläche mit Kreisflächengrundriss, bezogen auf die
Spannweite, eine verhältnismässig grosse Fläche. Solch grosse
Flächen, verbunden mit leichter Bauweise, sind bei Flugkörpern gefragt, die beispielsweise Solarenergie als Antriebsenergie verwenden.

Hier setzt die Erfindung ein, der die Aufgabe zugrundeliegt, einen Flugkörper mit kreisflächenähnlicher Grundrissfläche so auszugestalten, dass der Flugkörper im Gegensatz zu den bekannten Flugkörpern eigenstabil ist, d.h. ungesteuert beim Auftreten von Störungen bestrebt ist, die ursprüngliche Fluglage wieder einzunehmen.

Diese Aufgabe wird gemäss der Erfindung dadurch gelöst, dass die Profilierung des Flugkörpers ein Bildungszentrum aufweist, in dem die Austrittskanten sich vom Bildungszentrum aus radial erstreckender Flugprofile gleicher Form und gleicher Grösse liegen, wobei das Bildungszentrum zum Zentrum der Kreisfläche versetzt angeordnet ist, derart, dass die Eintrittskante des in der Versetzungsdiagonale liegenden Flügelprofils den Kreisumfang gerade berührt.

Zu der Erfindung gehört zudem ein Verfahren zur Herstellung des vorstehend definierten Flugkörpers, bei dem durch Drehen eines Tragflügelprofils mit der Austrittskante in dem Bildungszentrum ein Basiskörper mit einem Radius R gleich der Profiltiefe t gebildet wird und aus diesem Basiskörper mit einem Durchmesser d > R ausgeschnitten wird, der die Umfangslinie des Basiskörpers in einem Punkt berührt.

Die Erfindung ist in einem Ausführungsbeispiel in der Zeichnung dargestellt und nachfolgend beschrieben. Es zeigen:

Fig. 1     die Bildung eines Basiskörpers,

Fig. 2     das Ausschneiden des Flugkörpers aus dem Basiskörper,

Fig. 3     einen Grundriss des Basiskörpers mit dem ausgeschnittenen Flugkörper und

Fig. 4    Lage und Form einiger, den Flugkörper bildender
          Tragflügelprofile.

Die Erfindung geht von der Ueberlegung aus, dass ein Flugkörper mit kreisflächenähnlichem Grundriss besonders
günstige Einsatzmöglichkeiten aufweist, wenn der Flugkörper
als aerodynamisch fliegender Starrflügler ausgebildet ist,
jedoch im Gegensatz zu den bekannten Starrflüglern eigenstabil ist, d.h. bei Störungen seiner Fluglage die Eigenschaft aufweist, die ungestörte Fluglage wieder einzunehmen.
Wird nun diese Eigenstabilität mit einem Flugkörper mit
kreisflächenähnlicher Tragfläche kombiniert, kann damit ein
mit Solarenergie angetriebener Flugkörper hergestellt werden,
der leicht zu fliegen ist und zudem ein Höchstmass an Fläche
zur Unterbringung von Solarzellen aufweist. Selbstverständlich ist dieser Flugkörper keineswegs auf die Verwendung
mit einem Solarantrieb beschränkt. Vielmehr können damit
Flugkörper gebaut werden, die als Gleiter oder als mit
Strahlantrieb angetriebene Starflügler ausgebildet sind.

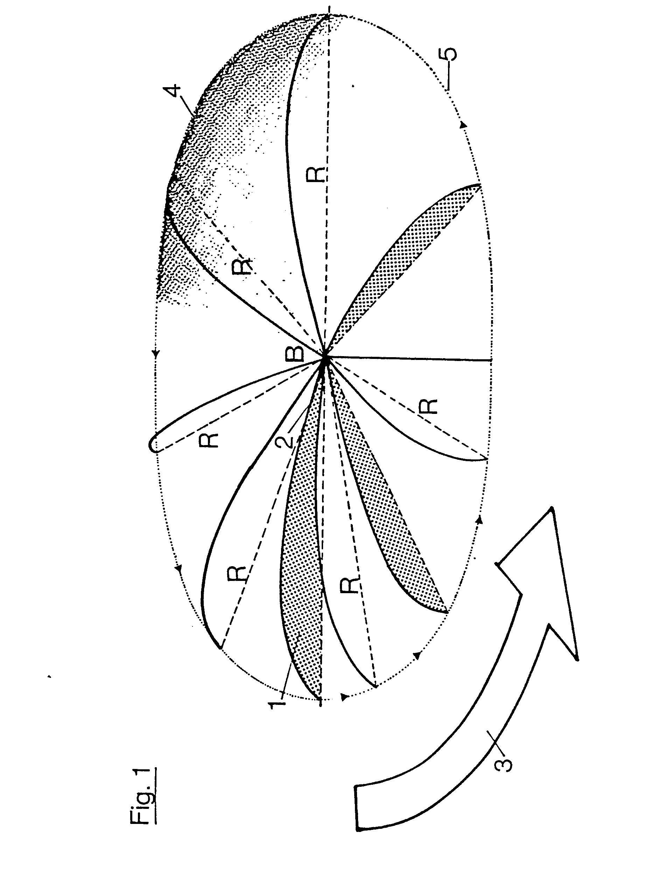

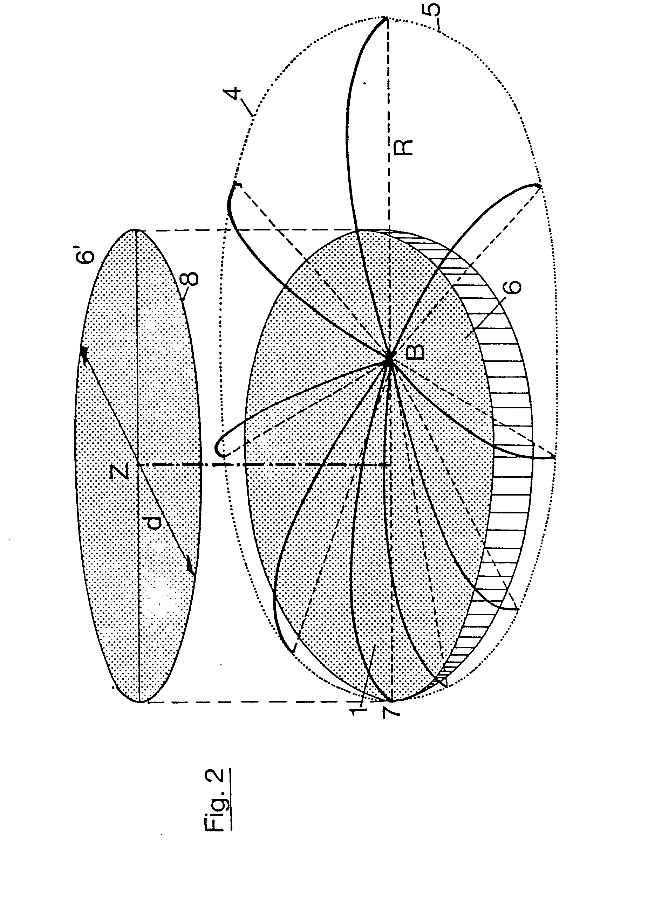

Es hat sich nun überraschend herausgestellt, dass ein solch
eigenstabiler Flugkörper in einfacher Weise hergestellt
werden kann, wie anhand der Figuren 1 - 4 nachstehend
beschrieben wird.

In Fig. 1 ist ein schraffiert dargestelltes Tragflügelprofil ersichtlich, dessen Austrittskante 2 in einem Punkt
liegt, der als Bildungszentrum B bezeichnet wird. Durch
Drehen des Tragflügelprofils 1 in Richtung des Pfeils 3
erhält man einen Basiskörper 4, der als Grundriss eine
Kreisfläche mit einem Radius R aufweist und dessen Körper
aus lauter radial angeordneten Tragflügelprofilen 1 besteht.
Der Basiskörper 4 weist im Bildungszentrum B nur eine
geringe Dicke auf, während die grösste Dicke dort liegt, wo das Tragflügelprofil 1 seine grösste Dicke aufweist, d.h. etwa in einem Abstand R/3 von der Umfangslinie 5.

Aus dem Basiskörper 4 wird nun ein kreisflächenähnlicher Körper 6 ausgeschnitten, dessen Grundrissfläche 6' einen Durchmesser d aufweist, der grösser ist als der Radius R des Basiskörpers 4. Die Lage des Körpers 6 ist derart gewählt, dass das Zentrum der Grundrissfläche 6' zwischen dem Bildungszentrum B und der Umfangslinie 5 liegt, derart, dass die Grundrissfläche 6' die Umfangslinie 5 in einem Punkt berührt. Dieser Punkt stellt die Eintrittskante 7 des Tragflügelprofils 1 dar, die definitionsgemäss beim Drehen des Tragflügelprofils 1 zur Bildung des Basiskörpers 4 die Umfangslinie 5 bildet. Die Eintrittskante 7 und das Bildungszentrum B liegen auf einer Radiuslinie R, auf der auch das Zentrum Z der Grundrissfläche 6' liegt. Die Radiuslinie 7-Z-B ist eine Symmetrielinie sowohl der Grundrissfläche 6' als auch des ausgeschnittenen Körpers 6.

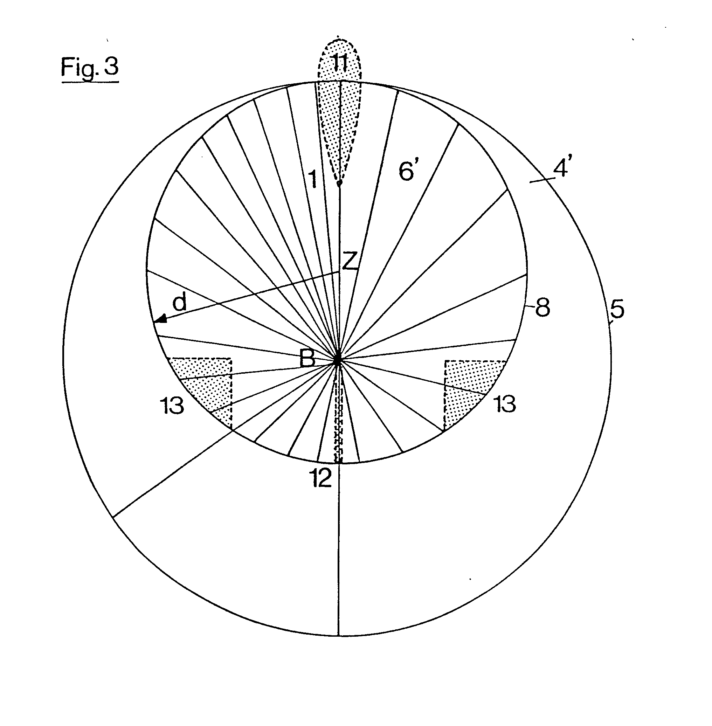

In Fig. 3 sind der Basiskörper 4 bzw. sein Grundriss 4' und die Grundrissfläche 6' des Körpers 6 dargestellt. Die vom Bildungszentrum ausgehenden Strahlen bezeichnen die Lage des Tragflügelprofils 1 während der Drehung in Pfeilrichtung 3. Man erkennt hieraus, dass das Tragflügelprofil 1 nur in der Symmetrielinie 7-Z-B vollständig vorhanden ist, während mit zunehmender Drehung vom Tragflügelprofil 1 immer mehr eintrittseitig abgeschnitten wird. Der Körper 6 besteht demnach aus einer Reihe radial vom Bildungszentrum B sich erstreckender Tragflügelprofile 1, von denen jedoch nur dasjenige in der Symmetrielinie vollständig ist, während alle übrigen Tragflügelprofile 1 eintrittseitig um das Mass $\Delta U$, d.h. um die Differenz zwischen der Umfangslinie 5 der Grundrissfläche 4' des Basiskörpers 4 und der Umfangslinie 8 der Grundrissfläche 6' des Körpers 6, verkürzt sind.

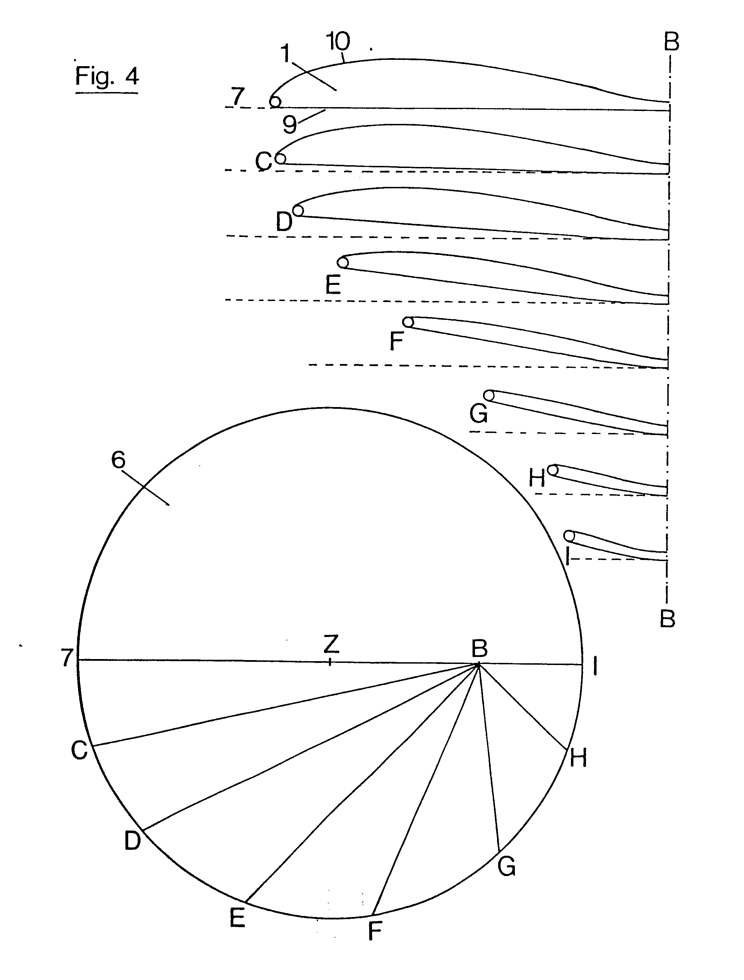

Damit der so gebildete Körper 6 eine strömungsgünstigere
Form aufweist, kann, wie dies in Fig. 4 dargestellt ist,
die Unterseite 9 des Tragflügelprofils 1 gegen die Oberseite 10 gerichtet werden, wie dies vor allem aus den
stark gekürzten Profilhinterteilen G-K ersichtlich ist.
In Fig. 4 sind im unteren Teil der Figur im Körper 6 die
aus dem Tragflügelprofil 1 gebildeten Tragflügelhinterteile A-K dargestellt. Die entsprechenden Profile sind,
nachdem die Profilunterseite 9 korrigiert worden ist, im
oberen Teil der Fig. 4 untereinander dargestellt. Man sieht
hieraus, dass das Tragflügelprofil 1 durch Korrektur der
Profilunterseite 9 immer dünner wird, wobei jedoch die Eintrittskanten gegenüber der Eintrittskante des vollständigen
Tragflügelprofils 1 höher liegen. Von der Seite gesehen
weist somit der zum Flugkörper gewordene Körper 6 einen
geschweiften Verlauf der Eintrittskante auf. Durch die Bildung der geschweiften Eintrittskante wird das grundsätzliche
Verhalten des Flugkörpers 6 nicht beeinflusst, sondern nur
der Widerstand etwas verringert.

Der Flugkörper 6 stellt, unabhängig davon, ob die Eintrittsseite der verkürzten Tragflügelprofile korrigiert wird oder
nicht, ein eigenstabiles Starrflügelflugzeug dar. In Fig. 4
sind die hierfür noch erforderlichen Teile gestrichelt eingezeichnet: eine Kabine 11, ein Seitenruder 12 und kombinierte Höhen- und Verwindungsruder 13. Der Flugkörper 6 kann
jedoch ohne diese zusätzlichen Teile als unbemannter Flugkörper verwendet werden.

Durch die beschriebene Herstellungsart des Flugkörpers 6
wird überraschend die Eigenstabilität des Flugkörpers 6
erreicht. Die Herstellung des Flugkörpers 6 ist einfach, da
nur eine einzige Lehre für das Tragflügelprofil 1 hergestellt werden muss, mit dem durch Drehen die gesamte Oberfläche des Flugkörpers 6 kontrolliert werden kann. Der in den Fig. 1 - 4 beschriebene Flugkörper 6 weist als Grundrissfläche eine Kreisfläche auf. Es sind jedoch Abweichungen von der Kreisfläche denkbar, z.B. eine Quadratfläche mit stark abgerundeten Ecken, ohne dadurch vom Erfindungsgedanken abzugehen.

Die Eigenstabilität des Flugkörpers 6 wird dann erreicht, wenn der Durchmesser d des Flugkörpers 6

$$d = R \, (1 + 0,15 \ldots 0,40)$$

gewählt wird.

Patentansprüche

1. Flugkörper, dessen Flügelgrundrissfläche (6') eine Kreisfläche ist und der eine Profilierung aufweist, dadurch gekennzeichnet, dass die Profilierung des Flugkörpers (6) ein Bildungszentrum (B) aufweist, in dem die Austrittskanten (2) sich vom Bildungszentrum (B) aus radial erstreckender Flugprofile (1) gleicher Form und gleicher Grösse liegen, wobei das Bildungszentrum (B) zum Zentrum (Z) der Kreisfläche (6') versetzt angeordnet ist, derart, dass die Eintrittskante (7) des in der Versetzungsdiagonale (7-Z-B) liegenden Flügelprofils (1) den Kreisumfang (5) gerade berührt.

2. Flugkörper nach Anspruch 1, dadurch gekennzeichnet, dass das Flügelprofil (1) unsymmetrisch ist.

3. Flugkörper nach Anspruch 1 oder 2, dadurch gekennzeichnet, dass die Versetzungsdiagonale (7-Z-B) Längsrichtung und Symmetrielinie des Flugkörpers (6) bildet.

4. Verfahren zur Herstellung eines Flugkörpers nach Anspruch 1, dadurch gekennzeichnet, dass durch Drehen eines Tragflügelprofils (1) mit der Austrittskante (2) in einem Bildungszentrum (B) ein Basiskörper (4) mit einem Radius (R) gleich der Profiltiefe gebildet wird und aus diesem Basiskörper (4) der Flugkörper mit einem Durchmesser (d > R) ausgeschnitten wird, der die Umfangslinie (5) des Basiskörpers (4) in einem Punkt (7) berührt.

5. Verfahren nach Anspruch 4, dadurch gekennzeichnet, dass der Durchmesser (d) des Flugkörpers (6)

$$d = R (1 + 0,15 \ldots 0,40)$$

gewählt wird.

6.  Verfahren nach Anspruch 4, dadurch gekennzeichnet, dass die Profilstärke der vom Kreisumfang (8) geschnittenen Flügelprofile (1) auf der Unterseite (9) vermindert wird, derart, dass die Eintrittskante (7) der Profiloberseite (10) angehoben wird.

7.  Verfahren nach Anspruch 4, dadurch gekennzeichnet, dass der Flugkörper (6) - in Flugrichtung gesehen - mit einer hinter dem aerodynamischen Schwerpunkt des Tragflügelprofils (1) liegenden, senkrecht zur Flugkörperfläche angeordneten Leitfläche (12) versehen wird.

Fig. 1

Fig. 2

0080517

Fig. 3

- 4/4 -

Fig. 4

0080517

Nummer der Anmeldung

EP 81 10 9908

Europäisches
Patentamt

**EUROPÄISCHER RECHERCHENBERICHT**

| **EINSCHLÄGIGE DOKUMENTE** | | | KLASSIFIKATION DER ANMELDUNG (Int Cl ) |
|---|---|---|---|
| Kategorie | Kennzeichnung des Dokuments mit Angabe, soweit erforderlich, der maßgeblichen Teile | betrifft Anspruch | |
| A | FR - A - 494 213 (STIEBER)  * Seite 1, Zeile 57 - Seite 2, Zeile 2; Seite 2, Zeilen 48-55; Figur 3 *  -- | 1 | B 64 C 39/06 |
| A | US - A - 2 864 567 (KISSINGER) | | |
| A | US - A - 1 887 411 (JOHNSON)  ---- | | |

RECHERCHIERTE
SACHGEBIETE (Int Cl )

B 64 C 39/00
3/00

KATEGORIE DER
GENANNTEN DOKUMENTE

X von besonderer Bedeutung
allein betrachtet
Y: von besonderer Bedeutung in
Verbindung mit einer anderen
Veröffentlichung derselben
Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das
jedoch erst am oder nach dem
Anmeldedatum veröffentlicht
worden ist
D: in der Anmeldung angeführtes
Dokument
L: aus andern Gründen angeführtes Dokument

& Mitglied der gleichen Patentfamilie, übereinstimmendes
Dokument

Der vorliegende Recherchenbericht wurde für alle Patentansprüche erstellt

| Recherchenort | Abschlußdatum der Recherche | Prüfer |
|---|---|---|
| Den Haag | 25-01-1982 | HAUGLUSTAINE |

EPA form 1503.1   06.78